# EUROPEAN PATENT APPLICATION

(11) **EP 4 603 764 A1**
(43) Date of publication of application: **20.08.2025**
(21) Application number: 25158916.4
(22) Date of filing: 19.02.2025
(51) Int. Cl.: F25B 31/00

(54) **SYSTEM AND METHOD FOR LUBRICANT MANAGEMENT IN A HEATING, VENTILATION, AIR CONDITIONING, AND REFRIGERATION (HVACR) SYSTEM**

(30) Priority: 19.02.2024 US 202463555308 P
(71) Applicant: Carrier Corporation, Palm Beach Gardens, FL 33418 (US)
(72) Inventor: QIU, Yifan, East Syracuse, 13057 (US)
(74) Representative: Dehns

(57) **Abstract**

A lubricant management system (200) for a HVACR system (100), is disclosed. The lubricant management system (200) includes a compressor (101), a first and a second set of orifices (201, 202, 204a, 204b, 204c), and a flow regulating valve (203). The compressor (101) includes lubricant inlet ports (207a, 207b, 207c) and lubricant outlet ports. The first set of orifices (201, 202) are adapted to receive lubricant via a first passageway (205) and a second passageway (206) via the flow regulating valve (203) disposed in the second passageway (206), such that the first passageway (205) and the second passageway (206) are fluidly connected. The second set of orifices (204a, 204b, 204c) are adapted to receive lubricant supplied by the first passageway (205) and the second passageway (206). Moreover, the second set of orifices (204a, 204b, 204c) are adapted to supply the received lubricant to each of the lubricant inlet ports (207a, 207b, 207c) such that the flow regulating valve (203) is open to supply lubricant based on the pressure difference between a first and a second pressure region of the compressor (101).

## Description

### CROSS REFERENCE TO RELATED APPLICATION

This application claims the benefit of U.S. Provisional Patent Application No. 63/555,308 filed on February 19, 2024, which is incorporated by reference herein in its entirety.

### FIELD OF THE INVENTION

The invention relates to lubricating systems for compressors of a Heating, Ventilation, Air Conditioning, and Refrigeration (HVACR) system. More particularly, the present invention relates to a lubricant management system for optimizing supply of lubricant to a compressor of the HVACR system.

### BACKGROUND

An HVACR system typically includes a compressor, which can be a screw compressor or a scroll compressor, among others. Such compressors employ bearings to facilitate the rotation of a shaft. The bearings are generally equipped with a lubrication system for facilitating smooth rotation of the shaft.

Conventionally, compressors include lubrication systems that supply lubricant into compression chambers and/or bearings of the compressors. As such, existing lubrication systems provide lubrication, cooling, and improved sealing within the compression chambers. However, the lubricant flow for the bearings of the compressor is driven by the pressure differential of discharge pressure and suction pressure of the HVACR system. In this regard, the compressor is required to work in both extremely low and extremely high pressure differential conditions. In the event of inadequate lubrication during either the extremely low pressure or the extremely high pressure differential conditions, the bearings, and consequently the compressor, may experience premature failure before reaching the anticipated bearing lifespan.

Therefore, it is desirable to provide a lubrication management system and method that optimizes supply of the lubricant to the compressor of the HVACR system.

### SUMMARY

This summary is provided to introduce a selection of concepts, in a simplified format, that are further described in the detailed description of the invention. This summary is neither intended to identify key or essential inventive concepts of the invention and nor is it intended for determining the scope of the invention.

According to a first aspect of the invention there is provided a lubricant management system for a Heating, Ventilation, Air Conditioning, and Refrigeration (HVACR) system. The lubricant management system includes a compressor, a first set of orifices, a second set of orifices, and a flow regulating valve. The compressor includes a plurality of lubricant inlet ports and a plurality of lubricant outlet ports. The first set of orifices include a first orifice adapted to receive lubricant via a first passageway and a second orifice adapted to receive the lubricant via a flow regulating valve disposed in a second passageway such that the first passageway and the second passageway are fluidly connected. The second set of orifices are adapted to receive the lubricant supplied by the first passageway and the second passageway. Moreover, the second set of orifices are adapted to supply the received lubricant to each of the lubricant inlet ports such that the flow regulating valve is adapted to open to supply the lubricant based on the pressure difference between a first pressure region and a second pressure region of the HVACR system.

Optionally, the opening of the second orifice is greater than the opening of the first orifice.

Optionally, the first pressure region is a region upstream of the first set of orifices and the flow regulating valve.

Optionally, the second pressure region is a region downstream of each of the second set of orifices.

Optionally, the flow regulating valve is adapted to open to supply the lubricant based on the pressure difference between the first pressure region and the second pressure region of the compressor exceeding a first threshold pressure difference.

Optionally, the flow regulating valve is adapted to open to supply the lubricant based on the pressure difference between the first pressure region and the second pressure region of the compressor falling below a second threshold pressure difference.

Optionally, the flow regulating valve is adapted to close based on the pressure difference between the first pressure region and the second pressure region of the compressor ranges between the second threshold pressure difference and the first threshold pressure difference.

According to a second aspect of the invention there is provided a method for optimizing supply of a lubricant to a compressor of a Heating, Ventilation, Air Conditioning, and Refrigeration (HVACR) system. The method includes the step of providing a lubricant management system including a compressor, a first set of orifices, a second set of orifices, and a flow regulating valve. Next, the method includes selectively actuating the flow regulating valve to open to supply the lubricant based on the pressure difference between a first pressure region and a second pressure region of the HVACR system.

Optionally, selectively actuating the flow regulating valve to open to supply the lubricant includes determining whether the pressure difference between the first pressure region and the second pressure region of the compressor exceeds a first threshold pressure difference and actuating the flow regulating valve to supply the lubricant.

Optionally, selectively actuating the flow regulating valve to open to supply the lubricant includes determining whether the pressure difference between the first pressure region and the second pressure region of the compressor falls below a second threshold pressure difference and actuating the flow regulating valve to supply the lubricant.

Optionally, the first pressure region is a region upstream of the first set of orifices and the flow regulating valve.

Optionally, the second pressure region is a region downstream of each of the second set of orifices.

Optionally, the opening of the second orifice is greater than the opening of the first orifice.

Optionally, the flow regulating valve is adapted to close based on the pressure difference between the first pressure region and the second pressure region of the compressor ranging between the second threshold pressure difference and the first threshold pressure difference.

To further clarify the advantages and features of the methods, systems, and apparatuses/devices, a more particular description of the methods, systems, and apparatuses/devices will be rendered by reference to specific exemplary embodiments thereof, which are illustrated in the appended drawings. It is appreciated that these drawings depict only exemplary embodiments of the invention and are therefore not to be considered limiting of its scope as set out in the appended claims. Certain exemplary embodiments of the invention will be described and explained by way of example only with reference to the accompanying drawings.

### BRIEF DESCRIPTION OF THE DRAWINGS

These and other features, aspects, and advantages of the invention will become better understood when the following detailed description is read with reference to the accompanying exemplary drawings in which like characters represent like parts throughout the drawings, wherein:
**Figure 1** illustrates a schematic diagram depicting a refrigerant circuit of a Heating Ventilation Air Conditioning and Refrigeration (HVACR) system;
**Figure 2A** illustrates a block diagram of a lubrication management system deployed in a compressor of the Heating, Ventilation, Air Conditioning, and Refrigeration (HVACR) system;
**Figure 2B** illustrates a typical compressor operating envelope graph plotted between a first pressure region and a second pressure region of the Heating, Ventilation, Air Conditioning, and Refrigeration (HVACR) system; and
**Figure 3** illustrates a flowchart depicting a method for optimizing supply of a lubricant to the compressor of the HVACR system.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the invention. Furthermore, in terms of the construction of the device, one or more components of the device may have been represented in the drawings by conventional symbols, and the drawings may show only those specific details that are pertinent to understanding the embodiments of the invention so as not to obscure the drawings with details that will be readily apparent to those of ordinary skill in the art having the benefit of the description herein.

### DETAILED DESCRIPTION OF FIGURES

For the purpose of promoting an understanding of the invention, reference will now be made to the various embodiments and specific language will be used to describe the same. It will nevertheless be understood that no limitation of the scope of the invention as set out in the appended claims is thereby intended, such alterations and further modifications in the illustrated system and device, and such further applications of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the invention. Thus, appearances of the phrase "in an embodiment", "in another embodiment", "some embodiments", "one or more embodiments" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

The term "unit" used herein may imply a unit including, for example, one of hardware, software, and firmware or a combination of two or more of them. The "unit" may be interchangeably used with a term such as logic, a logical block, a component, a circuit, and the like. The "unit" may be a minimum system component for performing one or more functions or may be a part thereof.

Embodiments of the invention will be described below in detail with reference to the accompanying drawings.

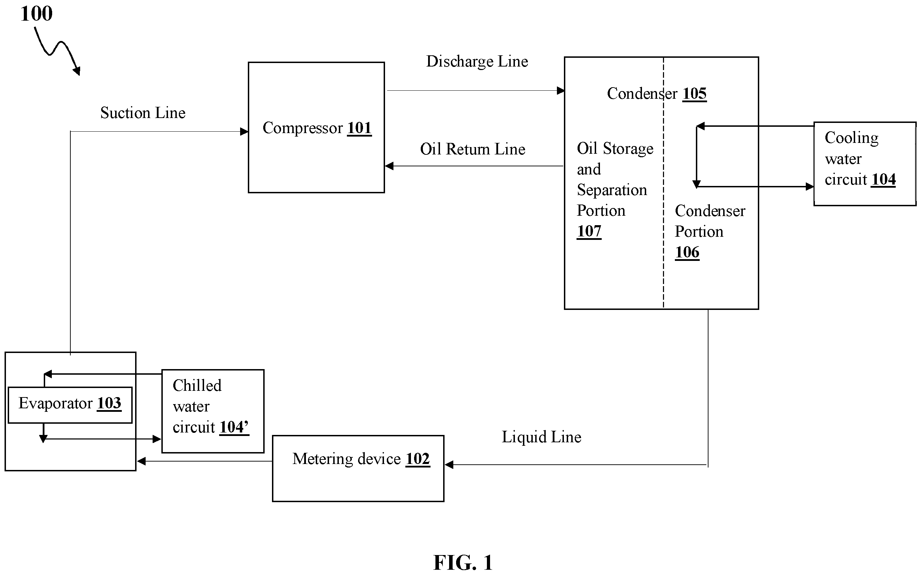

**Figure 1** illustrates a schematic diagram depicting an exemplary refrigerant circuit of a Heating Ventilation Airconditioning and Refrigeration (HVACR) system 100 according to one or more embodiments of the invention. As used herein, the "Heating Ventilation Airconditioning and Refrigeration (HVACR) system 100" refers to conventional chillers, air conditioners, refrigeration systems, or heat pumps that employ compressors, oil separators, condensers, metering devices, and evaporators connected in this order. It may be appreciated that the HVACR system 100 may include several additional components to regulate flow, pressure, and other parameters. Such additional components may include, but is not limited to regulating valves, ON/OFF valves, ejectors, etc. A compressor 101 used in such HVACR systems 100 may include, but are not limited to, reciprocating compressors, rotary compressors, scroll compressors, screw compressors, centrifugal compressors, and the like. The compressor 101 of the HVACR system 100, disclosed herein, compresses a refrigerant vapor to increase the pressure and temperature of the refrigerant vapor up to superheated levels. The compressor 101 discharges the superheated refrigerant vapor in addition to oil via a discharge line exemplarily illustrated in **Figure 1****.**

As used herein, "oil" refers to lubricating oil used to lubricate the moving components of the compressor 101. The oil in the compressor 101 also functions to cool the bearings down and to improve the smooth movement of the moving parts thereby increasing the system efficiency and prolonging life of the bearings. A condenser 105 is adapted to receive the mixture of oil and refrigerant vapor discharged from the compressor. The condenser 105 may include an oil storage and separation portion 107 that functions to separate oil from the mixture of oil and refrigerant vapor discharged from the compressor 101. In an embodiment, the oil storage and separation portion 107 may be housed within a secondary casing inside a single casing. Alternatively, the oil storage and separation portion 107 and a condenser portion 106 may be enclosed within the single casing. The remaining oil is collected in the oil storage and separation portion 107 and supplied back to the compressor 101 via an oil return line. On the other hand, the separated refrigerant vapor rises and is transferred to the condenser portion 106.

The separated oil within the oil storage and separation portion 107 of the condenser 105 is continually supplied to the compressor 101 through the oil return line connected to the compressor 101. In case the residual oil levels are insufficient to supply the compressor 101, the oil level switches will detect the lack of oil and controls will trip the system off and raise an alarm. The pressure difference between the high and low sides of the HVACR system 100 is the driving force for the oil to travel from the condenser 105 to the compressor 101. In certain embodiments, auxiliary components such as oil pumps and intermediate oil reservoirs may also be utilized to supply oil to the compressor 101.

The oil storage and separation portion 107 is adapted to transfer the refrigerant vapor separated from the mixture of oil and refrigerant vapor from the oil storage and separation portion 107 to the condenser portion 106 of the condenser 105. The condenser portion 106 condenses the separated refrigerant vapor to a high temperature refrigerant fluid. A cooling water circuit 104 exchanges heat with the condenser portion 106 thereby cooling the refrigerant vapor to form the high temperature refrigerant fluid. The high temperature refrigerant fluid is then passed through a metering device 102, such as an expansion valve, for expanding the condensed refrigerant fluid. After the refrigerant fluid passes through the metering device 102, the pressure of the refrigerant fluid is further reduced which lowers the temperature of the refrigerant fluid thereby supplying a low temperature and low pressure refrigerant fluid to an evaporator 103. The evaporator 103 evaporates the refrigerant fluid. A chilled water circuit 104' exchanges heat with the refrigerant fluid in the evaporator 103. The chilled water circuit 104' may then be circulated to external terminal units, for example, fan coil units, to exchange heat with air from the space to be cooled. While the low temperature and low pressure refrigerant fluid passes through the evaporator 103, the chilled water circuit 104' to be cooled exchanges heat with the refrigerant fluid thereby converting the refrigerant fluid completely to low temperature and low pressure refrigerant vapor. Finally, the low-pressure refrigerant vapor is supplied back to the compressor 101 to complete the refrigerant circuit.

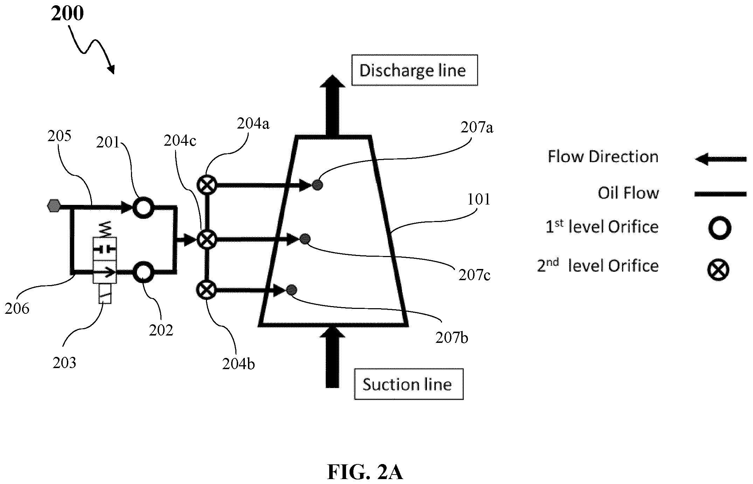

**Figure 2A** illustrates a block diagram of a lubricant management system 200 deployed in the compressor 101 of the Heating, Ventilation, Air Conditioning, and Refrigeration (HVACR) system 100, according to one or more embodiments of the invention.

The lubricant management system 200, disclosed herein includes the compressor 101, a first set of orifices 201, 202, a flow regulating valve 203, and a second set of orifices 204a, 204b, 204c. The compressor 101 includes a plurality of lubricant inlet ports 207a, 207b, 207c and a plurality of lubricant outlet ports. The first set of orifices 201, 202 includes a first orifice 201 and a second orifice 202. The first orifice 201 is adapted to receive lubricant via a first passageway 205. The second orifice 202 is adapted to receive lubricant via the flow regulating valve 203 disposed in a second passageway 206. In an embodiment, the opening of the second orifice 202 is greater than the opening of the first orifice 201. The first passageway 205 and the second passageway 206 are fluidly connected to the compressor 101 at one end and connected to the condenser 105 or a lubricant reservoir (not shown) at another end. The first passageway 205 and the second passageway 206 collectively supply the lubricant to each of the lubricant inlet ports 207a, 207b, 207c via the second set of orifices 204a, 204b, 204c respectively. It may be appreciated that the openings of the first set of orifices 201, 202, and the second set of orifices 204a, 204b, 204c may have a circular cross sectional profile or any other cross sectional shaped profile such as oval, rectangular, elliptical, square, and the like without departing from the scope of the invention as set out in the appended claims.

The second set of orifices 204a, 204b, 204c are adapted to receive lubricant supplied by the first passageway 205 and the second passageway 206 from the liquid reservoir or the condenser 105. Moreover, the second set of orifices 204a, 204b, 204c are adapted to supply the received lubricant to each of the lubricant inlet ports 207a, 207b, 207c respectively. The lubricant management system 200 optimizes the lubricant flow such that the flow regulating valve 203 is adapted to open to supply lubricant based on the pressure difference between a first pressure region and a second pressure region of the HVACR system 100. The first pressure region is a region upstream of the first set of orifices 201, 202, and the flow regulating valve 203. In an embodiment, the flow regulating valve 203 is a solenoid valve. The second pressure region is a region downstream of each of the second set of orifices 204a, 204b, 204c.

As shown in **Figure 2A****,** the first set of orifices 201, 202 is shown to include the first orifice 201 and the second orifice 202 only. Moreover, the second set of orifices are 204a, 204b, 204c and only a single flow regulating valve 203 is depicted in the block diagram. However, it will be appreciated that several configurations may be envisioned without departing from the scope of the invention as set out in the appended claims. For example, the number of first set of orifices 201, 202 may include more than two orifices without departing from the scope of the present invention as set out in the appended claims. Similarly, the second set of orifices 204a, 204b, 204c may include only two orifices or more than three orifices. As such, it will be appreciated the number of orifices, the number of associated passageways, and the number of flow regulating valves may be selected based on the desired flow settings of the lubricant management system 100.

The flow regulating valve 203 is adapted to open to supply lubricant based on the pressure difference between the first pressure region and the second pressure region of the HVACR system 100 exceeding a first threshold pressure difference. Alternatively, the flow regulating valve 203 is adapted to open to supply lubricant based on the pressure difference between the first pressure region and the second pressure region of the compressor 101 falling below a second threshold pressure difference. At extremely low or high pressure differential conditions, the flow regulating valve 203 opens and the pressure drop across the first set of orifices 201, 202 lowers, resulting in the overall flow rate increase thereby providing sufficient flow of the lubricant to the bearings. This is implemented through an oil manifold block with built-in solenoid valve. The block has one inlet passageway, which is then split to the first passageway 205 passing through the first orifice 201 and the second passageway 206 passing through the second orifice 202. Since the second orifice 202 has a larger opening than the first orifice 201, the second passageway 206 has a larger opening than the first passageway 205. The open and close of the large second passageway 206 is controlled by the flow regulating valve 203 (solenoid valve). Finally, the first passageway 205 and the second passageway 206 are joined together to feed the compressor 101.

The flow regulating valve 203 is adapted to close based on the pressure difference between the first pressure region and the second pressure region of the compressor 101 ranges between the second threshold pressure difference and the first threshold pressure difference. At normal pressure differential conditions, the flow regulating valve 203 closes and the lubricant flows only through the second orifice 202 resulting in a high pressure drop across the first set of orifices 201, 202 and therefore a low flow rate of lubricant passing through the second set of orifices 204a, 204b, 204c to the bearings. As a result, the compressor 101 can run at an extremely low pressure differential condition without lubrication failure by providing sufficient lubricant flow for bearing lubrication. The compressor 101 can run during normal conditions without sacrificing efficiency loss due to oversupply of oil. Moreover, the compressor 101 can run at exceedingly high pressure differential without bearing failure due to overheating by providing sufficient lubricant for cooling of the bearings.

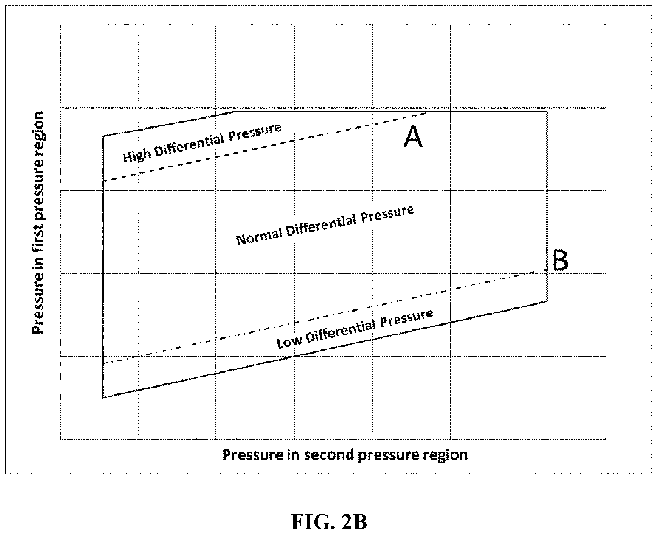

**Figure 2B** illustrates a typical compressor operating envelope graph plotted between the first pressure region and the second pressure region of the Heating, Ventilation, Air Conditioning, and Refrigeration (HVACR) system 100, according to one or more embodiments of the invention. As disclosed in the detailed description of **Figure 2A****,** the flow regulating valve 203 is adapted to open to supply lubricant based on the pressure difference between the first pressure region and the second pressure region of the HVACR system 100 exceeding the first threshold pressure difference or falling below the second threshold pressure difference. At extremely low or high pressure differential conditions, the flow regulating valve 203 opens and the pressure drop across the first set of orifices 201, 202 lowers, resulting in the overall flow rate increase thereby providing sufficient flow of the lubricant to the bearings.

As illustrated in the graph, the area between dotted lines A and B is the normal pressure differential area (when pressure differential ranges between the second threshold pressure difference and the first threshold pressure difference). Within this range, the flow regulating valve 203 closes and the lubricant flows only through the second orifice 202 resulting in a high pressure drop across the first set of orifices 201, 202 and therefore a low flow rate of lubricant passing through the second set of orifices 204a, 204b, 204c to the bearings.

As illustrated in the graph, the area above the dotted line A is the high pressure differential area (when pressure differential between the first pressure region and the second pressure region of the HVACR system 100 exceeds the first threshold pressure difference). Similarly, the area below the dotted line B is the low pressure differential area (when pressure differential between the first pressure region and the second pressure region of the HVACR system 100 falls below the second threshold pressure difference). At extremely low or high pressure differential conditions, the flow regulating valve 203 opens and the pressure drop across the first set of orifices 201, 202 lowers, resulting in the overall flow rate increase thereby providing sufficient flow of the lubricant to the bearings. The lubricant management system 200, disclosed herein, can change the overall flow of the lubricant to the compressor 101 without affecting the proportion of the total flow of the lubricant to each inlet port of the compressor 101. Some components, say, bearings, need more lubricant than other components, say rotors. With this setup, the bearings will always get more supply of the lubricant than rotors no matter the overall flow. This makes the use and supply of the lubricant more efficient.

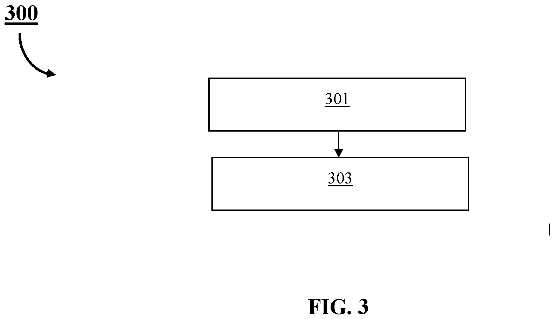

**Figure 3** illustrates a flowchart depicting a method 300 for optimizing supply of the lubricant to the compressor 101 of the Heating, Ventilation, Air Conditioning, and Refrigeration (HVACR) system 100.

At Step 301, the method 300 includes providing a lubricant management system 200 including the compressor 101, the first set of orifices 201, 202, the second set of orifices 204a, 204b, 204c, and the flow regulating valve 203.

At Step 303, the method 300 includes selectively actuating the flow regulating valve 203 to open to supply lubricant based on the pressure difference between the first pressure region and the second pressure region of the HVACR system 100.

In one or more embodiments, the step of selectively actuating the flow regulating valve 203 to open to supply the lubricant includes determining whether the pressure difference between the first pressure region and the second pressure region of the HVACR system 100 exceeds a first threshold pressure difference and actuating the flow regulating valve 203 to supply the lubricant.

In one or more embodiments, the step of selectively actuating the flow regulating valve 203 to open to supply the lubricant includes determining whether the pressure difference between the first pressure region and the second pressure region of the HVACR system 100 falls below a second threshold pressure difference and actuating the flow regulating valve 203 to supply the lubricant.

While specific language has been used to describe the subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

## Claims

1. A lubricant management system (200) for a Heating, Ventilation, Air Conditioning, and Refrigeration (HVACR) system (100), the lubricant management system comprising:
a compressor (101) including a plurality of lubricant inlet ports (207a, 207b, 207c) and a plurality of lubricant outlet ports;
a first set of orifices (201, 202) comprising:
a first orifice (201) adapted to receive lubricant via a first passageway (205);
a second orifice (202) adapted to receive the lubricant via a flow regulating valve (203) disposed in a second passageway (206), wherein the first passageway and the second passageway are fluidly connected;
a second set of orifices (204a, 204b, 204c) adapted to receive the lubricant supplied by the first passageway and the second passageway, the second set of orifices adapted to supply the received lubricant to each of the lubricant inlet ports of the compressor,
wherein the flow regulating valve is adapted to open to supply the lubricant based on the pressure difference between a first pressure region and a second pressure region of the HVACR system.

2. The lubricant management system (200) according to claim 1, wherein the opening of the second orifice (202) is greater than the opening of the first orifice (201).

3. The lubricant management system (200) according to any of claims 1 or 2, wherein the first pressure region is a region upstream of the first set of orifices (201, 202) and the flow regulating valve (203).

4. The lubricant management system (200) according to and previous claim, wherein the second pressure region is a region downstream of each of the second set of orifices (204a, 204b, 204c).

5. The lubricant management system (200) according to any previous claim, wherein the flow regulating valve (203) is adapted to open to supply the lubricant based on the pressure difference between the first pressure region and the second pressure region of the HVACR system (100) exceeding a first threshold pressure difference.

6. The lubricant management system (200) according to any previous claim, wherein the flow regulating valve (203) is adapted to open to supply the lubricant based on the pressure difference between the first pressure region and the second pressure region of the HVACR system (100) falling below a second threshold pressure difference.

7. The lubricant management system (200) according to any previous claim, wherein the flow regulating valve (203) is adapted to close based on the pressure difference between the first pressure region and the second pressure region of the HVACR system (100) ranging between the second threshold pressure difference and the first threshold pressure difference.

8. A method for optimizing supply of a lubricant to a compressor of a Heating, Ventilation, Air Conditioning, and Refrigeration (HVACR) system (100), the method comprising:
providing a lubricant management system (200) comprising a compressor (101), a first set of orifices (201, 202), a second set of orifices (204a, 204b, 204c), and a flow regulating valve (203); and
selectively actuating the flow regulating valve to open to supply lubricant based on the pressure difference between a first pressure region and a second pressure region of the HVACR system.

9. The method according to claim 8, wherein selectively actuating the flow regulating valve (203) to open to supply the lubricant comprises:
determining whether the pressure difference between the first pressure region and the second pressure region of the HVACR system (100) exceeds a first threshold pressure difference; and
actuating the flow regulating valve to supply the lubricant.

10. The method according to any of claims 8 or 9, wherein selectively actuating the flow regulating valve (203) to open to supply the lubricant comprises:
determining whether the pressure difference between the first pressure region and the second pressure region of the HVACR system (100) falls below a second threshold pressure difference; and
actuating the flow regulating valve to supply the lubricant.

11. The lubricant management system according to any of claims 8 to 10, wherein the first pressure region is a region upstream of the first set of orifices (201, 202) and the flow regulating valve (203).

12. The lubricant management system according to any of claims 8 to 11, wherein the second pressure region is a region downstream of each of the second set of orifices (204a, 204b, 204c).

13. The lubricant management system according to any of claims 8 to 12, wherein the opening of the second orifice (202) is greater than the opening of the first orifice (201).

14. The lubricant management system according to any of claims 8 to 13, wherein the flow regulating valve (203) is adapted to close based on the pressure difference between the first pressure region and the second pressure region of the HVACR system (100) ranging between the second threshold pressure difference and the first threshold pressure difference.
